# EUROPEAN PATENT APPLICATION

(11) **EP 3 585 017 A2**
(43) Date of publication of application: **25.12.2019**
(21) Application number: 19173115.7
(22) Date of filing: 07.05.2019
(51) Int. Cl.: H04L 12/801, H04L 12/861, H04L 12/841

(54) **TECHNOLOGIES FOR PROVIDING ADAPTIVE POLLING OF PACKET QUEUES**

(30) Priority: 18.06.2018 US 201816011103
(71) Applicant: INTEL Corporation, Santa Clara, CA 95054 (US)
(72) Inventor: MACNAMARA, Chris, Limerick V94X65T (IE); BROWNE, John, Limerick V94 C44N (IE); KANTECKI, Tomasz, Ennis V95C8C0 (IE); LOFTUS, Ciara, H 54 NT28 Galway (IR); BARRY, John, Galway H91 Y0F5 (IE); CONNOR, Patrick, Beaverton, OR 97007 (US); FLEMING, Patrick, Slatt Wolfhill R14 W649 (IE)
(74) Representative: Samson & Partner Patentanwälte mbB

(57) **Abstract**

Technologies for providing adaptive polling of packet queues include a compute device. The compute device includes a network interface controller and a compute engine that includes a set of cores and a memory that includes a queue to store packets received by the network interface controller. The compute engine is configured to determine a predicted time period for the queue to receive packets without overflowing, execute, during the time period and with a core that is assigned to periodically poll the queue for packets, a workload, and poll, with the assigned core, the queue to remove the packets from the queue. Other embodiments are also described and claimed.

## Description

### BACKGROUND

To reduce the likelihood of dropping packets, a compute device may dedicate at least one core (e.g., a processing device of a processor that is capable of reading and executing instructions) to polling (e.g., checking to determine whether any items, such as packets, are available) an input queue that temporarily stores packets received by a network interface controller (NIC) of the compute device. More specifically, a thread executed by a dedicated core polls the input queue at a fixed interval to retrieve packets to guard against the input queue filling up and losing packets (e.g., because there is no capacity in the queue to store another packet). The core that is dedicated to polling the queue does not perform any work for an underlying workload (e.g., an application, a set of operations, etc.) to which the received packets pertain (e.g., contain data for the corresponding workload). In compute devices that execute multiple virtual machines (e.g., each on behalf of a different customer of a cloud computing service), a separate core is typically dedicated to polling a corresponding input queue used by each virtual machine, making a significant number of the cores unavailable to assist in the execution of the underlying workloads.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
FIG. 1 is a simplified diagram of at least one embodiment of a compute device for providing adaptive polling of a queue;
FIGS. 2-4 are a simplified block diagram of at least one embodiment of a method for providing adaptive polling of a queue that may be performed by the compute device of FIG. 1; and
FIG. 5 is timeline of a sequence of operations performed by the compute device of FIG. 1 while performing adaptive polling.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

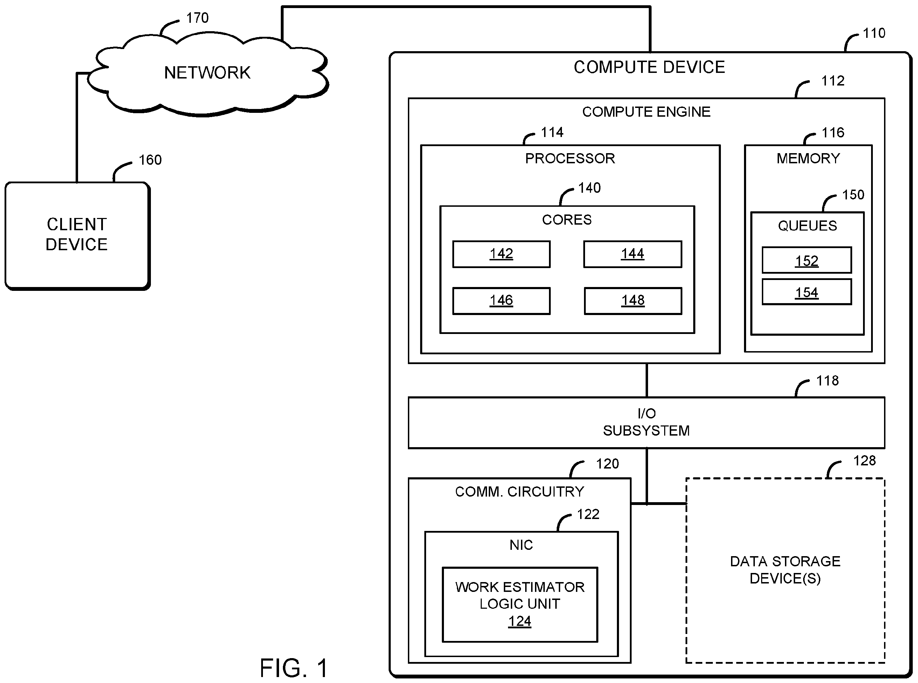

Referring now to FIG. 1, a compute device 110 for providing adaptive polling of a queue is in communication with a client device 160 through a network 170. The compute device 110, in operation, may execute one or more workloads (e.g., application(s) hosted in one or more virtual machines), such as to perform services on behalf of the client device 160, using cores 140 of a processor 114. In doing so, the compute device 110 operates on packets (e.g., discrete units of data) received by a network interface controller (NIC) 122 of the compute device 110 that are placed into a queue 150 of the compute device 110 by the NIC 122. In the illustrative embodiment, the compute device 110 polls the queue 150 of received packets with a core 140 (e.g., the core 142) that also performs processing of data in the received packets (e.g., in a worker thread). More specifically, in the illustrative embodiment, rather than dedicating a core 140 (e.g., the core 142) exclusively to continually determining whether the queue 150 contains packets to be operated on (e.g., polling the queue), the compute device 110 determines a time period in which the queue 150 can safely be unpolled (e.g., before the queue 150 overflows and packets are dropped), and executes workload operations with the core 142 during that time period. In some embodiments, the compute device 110 may calculate the time period based on a worst case scenario (e.g., a potential scenario in which packets are received into the queue 150 at the maximum theoretical rate that the network interface controller 122 is capable of receiving packets). In other embodiments, the compute device 110 may calculate the time period as a function of metadata written into packet descriptors (e.g., data sets that describe each packet) by the NIC 122. The metadata may indicate the number of packets received by the NIC 122 within a predefined time frame (e.g., an instantaneous burst size) and/or an analysis of the compute requirements of the underlying payload (e.g., data) in each packet (e.g., a cryptographic payload may require more compute capacity and/or more time to process than another type of payload). Similarly, the compute device 110 may determine a predicted time period in which an output queue (e.g., a queue 150, such as the queue 154, for packets to be sent out of the NIC 122) can go unpolled and, during that time period, execute workload operations rather than polling the output queue 154. As a result, the compute device 110 provides increased efficiency (e.g., more processing capacity) over a typical compute device that, for each application or virtual machine executed by the compute device, dedicates one or more cores to continually polling a queue.

As shown in FIG. 1, the illustrative compute device 110 includes a compute engine 112, an input/output (I/O) subsystem 118, communication circuitry 120, and one or more data storage devices 128. Of course, in other embodiments, the compute device 110 may include other or additional components, such as those commonly found in a computer (e.g., a display, peripheral devices, etc.). Additionally, in some embodiments, one or more of the illustrative components may be incorporated in, or otherwise form a portion of, another component. Further, in some embodiments, one or more of the components may be any distance away from another component of the compute device 110 (e.g., distributed across a data center). The compute engine 112 may be embodied as any type of device or collection of devices capable of performing various compute functions described below. In some embodiments, the compute engine 112 may be embodied as a single device such as an integrated circuit, an embedded system, a field-programmable gate array (FPGA), a system-on-a-chip (SOC), or other integrated system or device. In the illustrative embodiment, the compute engine 112 includes or is embodied as a processor 114 and a memory 116. The processor 114 may be embodied as any type of processor capable of performing the functions described herein. For example, the processor 114 may be embodied as a multi-core processor(s), a microcontroller, or other processor or processing/controlling circuit. In some embodiments, the processor 114 may be embodied as, include, or be coupled to an FPGA, an application specific integrated circuit (ASIC), reconfigurable hardware or hardware circuitry, or other specialized hardware to facilitate performance of the functions described herein. In the illustrative embodiment, the processor 114 includes a set of cores 142, 144, 146, and 148 (collectively, the cores 140). Each of the cores 140 may be embodied as any device or circuitry capable of receiving instructions and performing operations based on those instructions. While four cores 140 are shown in the processor 114, it should be understood that in other embodiments, the number of cores 140 may be different.

The main memory 116 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as dynamic random access memory (DRAM) or static random access memory (SRAM). One particular type of DRAM that may be used in a memory module is synchronous dynamic random access memory (SDRAM). In particular embodiments, DRAM of a memory component may comply with a standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces.

In one embodiment, the memory device is a block addressable memory device, such as those based on NAND or NOR technologies. A memory device may also include a three dimensional crosspoint memory device (e.g., Intel 3D XPoint™ memory), or other byte addressable write-in-place nonvolatile memory devices. In one embodiment, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory. The memory device may refer to the die itself and/or to a packaged memory product.

In some embodiments, 3D crosspoint memory (e.g., Intel 3D XPoint™ memory) may comprise a transistor-less stackable cross point architecture in which memory cells sit at the intersection of word lines and bit lines and are individually addressable and in which bit storage is based on a change in bulk resistance. In some embodiments, all or a portion of the main memory 116 may be integrated into the processor 114. In operation, the main memory 116 may store various software and data used during operation such as applications, programs, libraries, and drivers. In the illustrative embodiment, the memory 116 defines one or more queues 150 (e.g., queues 152, 154), each of which may be embodied as a set of memory accessible at one or more memory addresses and capable of storing data sets (e.g., packets) to be operated on by one or more of the cores 140, the NIC 122, and/or other components of the compute device 110. For example, the queue 152 may temporarily store packets received by the NIC 122 (e.g., through the network 170 from the client device 160 or from another source) and the queue 154 may temporarily store packets to be sent by the NIC 122 (e.g., through the network 170).

The compute engine 112 is communicatively coupled to other components of the compute device 110 via the I/O subsystem 118, which may be embodied as circuitry and/or components to facilitate input/output operations with the compute engine 112 (e.g., with the processor 114 and/or the main memory 116) and other components of the compute device 110. For example, the I/O subsystem 118 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some embodiments, the I/O subsystem 118 may form a portion of a system-on-a-chip (SoC) and be incorporated, along with one or more of the processor 114, the main memory 116, and other components of the compute device 110, into the compute engine 112.

The communication circuitry 120 may be embodied as any communication circuit, device, or collection thereof, capable of enabling communications over the network 170 between the compute device 110 and another compute device (e.g., the client device 160, etc.). The communication circuitry 120 may be configured to use any one or more communication technology (e.g., wired or wireless communications) and associated protocols (e.g., Ethernet, Bluetooth®, Wi-Fi®, WiMAX, etc.) to effect such communication.

The illustrative communication circuitry 120 includes a network interface controller (NIC) 122, which may also be referred to as a host fabric interface (HFI). The NIC 122 may be embodied as one or more add-in-boards, daughter cards, network interface cards, controller chips, chipsets, or other devices that may be used by the compute device 110 to connect with another compute device (e.g., the client device 160, etc.). In some embodiments, the NIC 122 may be embodied as part of a system-on-a-chip (SoC) that includes one or more processors, or included on a multichip package that also contains one or more processors. In some embodiments, the NIC 122 may include a local processor (not shown) and/or a local memory (not shown) that are both local to the NIC 122. In such embodiments, the local processor of the NIC 122 may be capable of performing one or more of the functions of the compute engine 112 described herein. Additionally or alternatively, in such embodiments, the local memory of the NIC 122 may be integrated into one or more components of the compute device 110 at the board level, socket level, chip level, and/or other levels. In the illustrative embodiment, the NIC 122 includes a work estimator logic unit 124 which may be embodied as any device or circuitry (e.g., a co-processor, an ASIC, etc.) configured to write metadata to a packet descriptor for a received packet (e.g., a packet written to the input queue 152) that indicates a computational load associated with the packet. For example, the work estimator logic unit 124 may write metadata indicative of an instantaneous burst size associated with the packet (e.g., the number of packets that the NIC 122 received in a burst, such as a relatively short predefined period of time) and/or may write metadata indicative of the type of workload the packet pertains to (e.g., a cryptographic workload, a compression workload, an artificial intelligence (AI) model training workload, etc.). As described herein, the computational load associated with the received packets, in the illustrative embodiment, is inversely related to the rate at which the cores 140 are able to remove the packets from the input queue 152 (e.g., a set of received packets that take more time to process will be removed from the queue 152 slower than a set of packets associated with a workload that has a smaller computational load).

The one or more illustrative data storage devices 128 may be embodied as any type of devices configured for short-term or long-term storage of data such as, for example, memory devices and circuits, memory cards, hard disk drives, solid-state drives, or other data storage devices. Each data storage device 128 may include a system partition that stores data and firmware code for the data storage device 128. Each data storage device 128 may also include one or more operating system partitions that store data files and executables for operating systems.

The client device 160 may have components similar to those described in FIG. 1 with reference to the compute device 110. The description of those components of the compute device 110 is equally applicable to the description of components of the client device and is not repeated herein for clarity of the description. Further, it should be appreciated that any of the compute device 110 and the client device 160 may include other components, sub-components, and devices commonly found in a computing device, which are not discussed above in reference to the compute device 110 and not discussed herein for clarity of the description.

As described above, the compute device 110 and the client device 160 are illustratively in communication via the network 170, which may be embodied as any type of wired or wireless communication network, including global networks (e.g., the Internet), local area networks (LANs) or wide area networks (WANs), cellular networks (e.g., Global System for Mobile Communications (GSM), 3G, Long Term Evolution (LTE), Worldwide Interoperability for Microwave Access (WiMAX), etc.), digital subscriber line (DSL) networks, cable networks (e.g., coaxial networks, fiber networks, etc.), or any combination thereof.

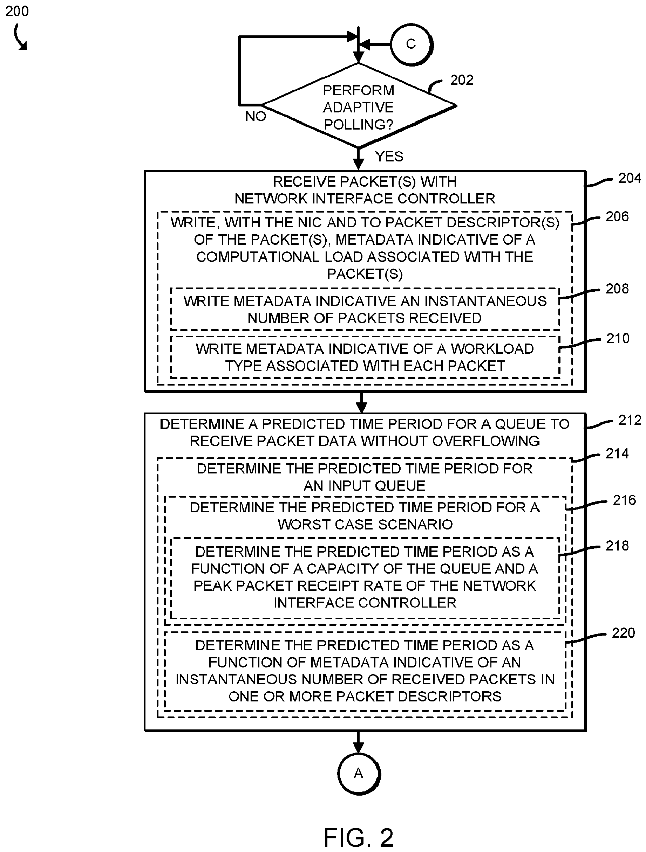

Referring now to FIG. 2, the compute device 110, in operation, may execute a method 200 for providing adaptive polling of one or more queues 150. The method 200 begins with block 202, in which the compute device 110 determines whether to perform adaptive polling. In the illustrative embodiment, the compute device 110 may determine to perform adaptive polling in response to a determination that a configuration file (e.g., in a data storage device 128) indicates to perform adaptive polling, in response to a determination that the NIC 122 is equipped with the work estimator logic unit 124, and/or based on other factors. Regardless, in response to a determination to perform adaptive polling, the method 200 advances to block 204 in which the compute device 110 receives one or more packets with the NIC 122. In doing so, and as indicated in block 206, the compute device 110 may write, with the NIC 122, to the packet descriptor (e.g., a data set in the memory 116 that describes the corresponding packet) of each received packet, metadata indicative of a computational load associated with the received packet. For example, and as indicated in block 208, the compute device 110 may write (e.g., with the work estimator logic unit 124 of the NIC 122) metadata indicative of an number of packets that were received in a burst (e.g., a number of packets received within a relatively short predefined time frame). Additionally or alternatively, the compute device 110 may write (e.g., with the work estimator logic unit 124) metadata indicative of a workload type associated with each packet, such as by analyzing the data in the packet for a particular signature (e.g., a pattern of bytes) that is associated (e.g., in a table, by an artificial intelligence inference model, etc.) with a workload type (e.g., a cryptographic workload, a compression workload, etc.), as indicated in block 210.

Subsequently, in block 212, the compute device 110 determines a predicted time period in which a queue 150 may receive packet data without overflowing (e.g., without running out of capacity and dropping packets). In doing so, the compute device 110 may determine the predicted time period for an input queue 152, as indicated in block 214. In the illustrative embodiment, the compute device 110 determines the predicted time period for a worst case scenario, as indicated in block 216. For example, and as indicated in block 218, the compute device 110 may determine the predicted time period as a function of the capacity of the queue (e.g., the number of packets that the queue is capable of storing) and the peak packet receipt rate of the NIC 122. In other words, the compute device 110 may determine how long the queue 152 can receive packets if the NIC 122 is receiving those packets and placing them in the queue 152 at the maximum theoretical speed that the NIC 122 is able to operate. In block 220, the compute device 110 may determine the time period as a function of the metadata in the packet descriptor(s) indicative of the instantaneous number of received packets (e.g., from block 208). Such information may be indicative of the present rate at which packets are being received from the NIC 122.

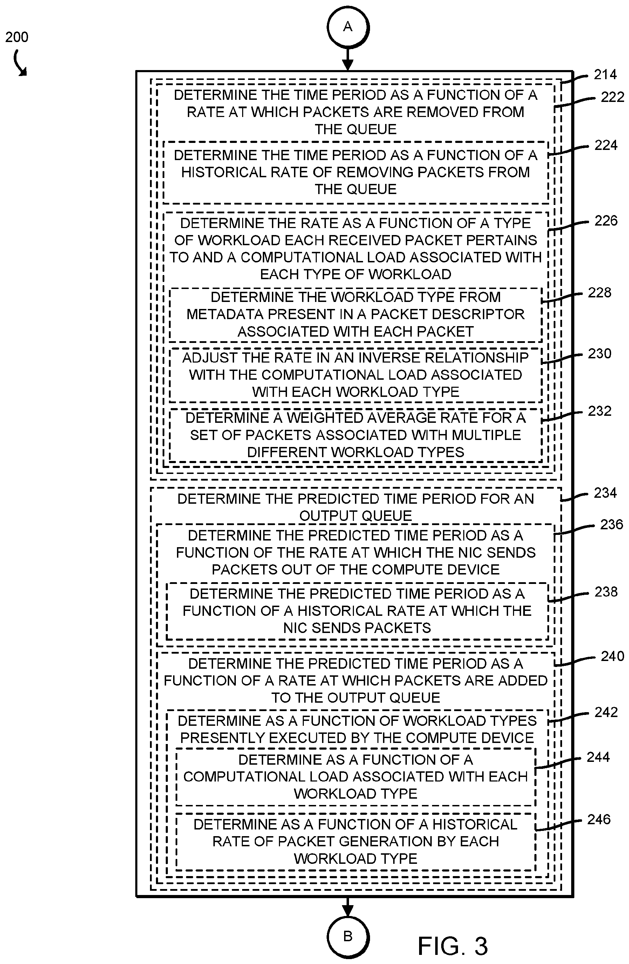

Referring now to FIG. 3, in determining the predicted time period associated with the input queue 152, the compute device 110 may determine the time period as a function of a rate at which packets are removed from the queue 152, as indicated in block 222. In doing so, and as indicated in block 224, the compute device 110 may determine the time period as a function of a historical rate at which the compute device 110 (e.g., the cores 140 executing worker threads to perform workload operations associated with the packets) has removed packets from the input queue 152. As indicated in block 226, the compute device 110 may determine the rate as a function of the type of workload that each received packet pertains to and a computational load associated with each workload type. In doing so, the compute device 110 may determine the workload type from metadata present in a packet descriptor associated with each packet, as indicated in block 228. As described above, the NIC 122 may write the metadata to the workload descriptors when the packets are received (e.g., in block 206 of FIG. 2). The compute device 110 may estimate the rate at which the packets are removed from the queue 152 in an inverse relationship with the computational load associated with each workload type represented in the packets (e.g., a workload type associated with a greater computational load will result in a slower rate of removing the corresponding packets from the input queue 152 and a workload type associated with a lighter computational load will result in a faster rate of removing the corresponding packets from the input queue 152), as indicated in block 230. In some embodiments, the compute device 110 may determine a weighted average rate for a set of packets associated with different workload types (e.g., a computational load associated with one workload type multiplied by the number of packets in the input queue 152 associated with that workload type plus a computational load associated with another workload type, multiplied by the number of packets associated with the workload type, divided by the total number of packets in the queue 152), as indicated in block 232.

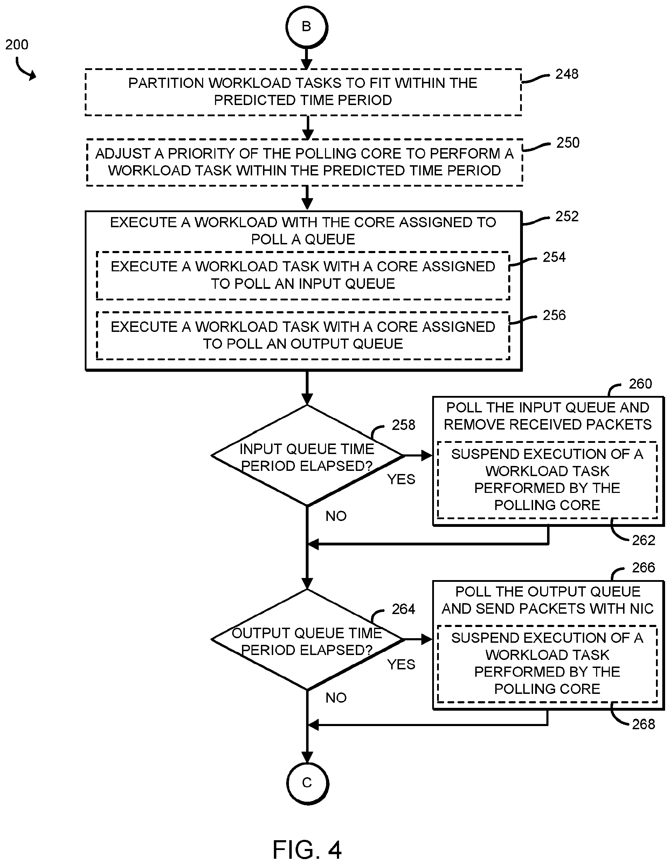

The compute device 110 may also determine the predicted time period for an output queue 154 to fill up, as indicated in block 234. In doing so, the compute device 110 may determine the predicted time period as a function of the rate at which the NIC 122 sends packets (e.g., from the output queue 154) out of the compute device 110 (e.g., to another compute device), as indicated in block 236. As indicated in block 238, the compute device 110 may determine the predicted time period as a function of a historical rate at which the NIC 122 has sent packets (e.g., an average rate over a predefined time period). The compute device 110 may also determine the time period as a function of a rate at which packets are added to the output queue 154, as indicated in block 240. In doing so, the compute device 110 may determine the rate as a function of the types of workloads presently being executed by the compute device 110, as indicated in block 242. The compute device 110 may determine the rate as a function of the computational load associated with each workload type, as indicated in block 244. Additionally or alternatively, as indicated in block 246, the compute device 110 may determine the rate as a function of a historical rate of packet generation for each workload type (e.g., a compression workload may have generated 200 packets per second over a predefined time period while an encryption workload may have generated 400 packets per second of the predefined time period, etc.). Subsequently, the method 200 advances to block 248 of FIG. 4, in which the compute device 110 may partition a workload into tasks (e.g., sets of operations) that fit within the predicted time period (e.g., the predicted time period determined in block 212 for the input queue 152 to fill up).

Referring now to block 250 of FIG. 4, the compute device 110 may also adjust a priority of a core assigned to poll the queue (e.g., the input queue 152) to perform a workload task within the predicted time period (e.g., increasing the priority of the core 142 to enable the core 142 to perform a task that would otherwise not be completed within the time period predicted in block 212). As indicated in block 252, the compute device 110 executes a workload (e.g., a task within a workload) using the core (e.g., the core 142) that is also assigned to periodically poll a queue 150. In other words, rather than exclusively polling the queue 150, the core 140 performs a workload during the predicted time period, while the corresponding queue 150 continually fills up but does not overflow. In doing so, and as indicated in block 254, the compute device 110 may execute a workload task with a core 140 (e.g., the core 142) assigned to poll the input queue 152. Additionally, and as indicated in block 256, the compute device 110 may execute a workload task with a core 140 (e.g., the core 144) that is assigned to poll the output queue (e.g., the queue 154).

In block 258, the compute device 110 determines whether the predicted time period associated with the input queue 152 (e.g., from block 212) has elapsed. In doing so, the compute device 110 polls the input queue 152 and removes any received packets. In polling the input queue 152, the compute device 110 may suspend execution of a workload task performed by core assigned to poll the input queue 152 (e.g., the core 142). Additionally, in block 264, the compute device 110 may determine whether a predicted time period (e.g., a time period determined in block 234) associated with the output queue 154 elapsed. If so, the compute device 110 may poll the output queue 154 for any packets and send those packets out of the compute device 110 with the NIC 122. In doing so, the compute device 110 may also suspend execution of a workload task performed by the polling core 142. Subsequently, the compute device 110 loops back to block 202 of FIG. 2, in which the compute device 110 determines whether to continue to perform adaptive polling.

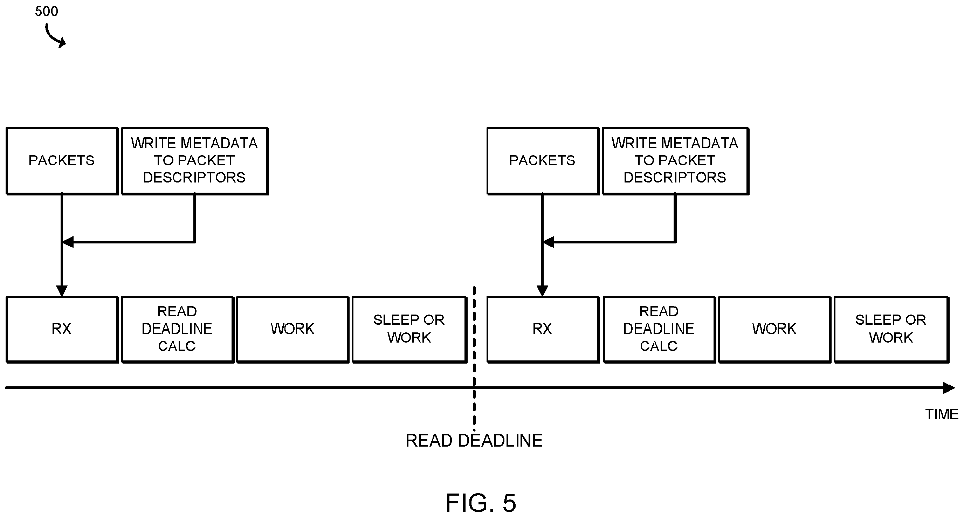

Referring now to FIG. 5, a timeline 500 of a sequence of operations performed by the compute device 110 is shown. As shown, the packets arrive in intervals in a receive ("RX") phase, similar to block 204 of FIG. 2, and the work estimator logic unit 124 writes metadata to the packet descriptor(s) of the received packets, similar to block 206 of FIG. 2. The metadata, in the illustrative embodiment, indicates a computational load associated with the packet(s). Additionally, the compute device 110 calculates the next read deadline or time to poll the input queue 152 for additional packets (e.g., similar to block 212 of FIG. 2). Subsequently, the compute device 110 performs work (e.g., a workload task) on the received packets in the queue 152 with the core (e.g., the core 142) that is also assigned to periodically poll the input queue 152 (e.g., similar to block 252 of FIG. 4). If the compute device 110 completes the workload tasks before the predicted time period has elapsed, the compute device 110 may perform an additional workload task or sleep (e.g., operate in a low power state). Subsequently, when the predicted time period has elapsed, the compute device 110 again polls the input queue 152 and repeats the process.

### EXAMPLES

Illustrative examples of the technologies disclosed herein are provided below. An embodiment of the technologies may include any one or more, and any combination of, the examples described below.
Example 1 includes a compute device comprising a network interface controller; a compute engine that includes a plurality of cores and a memory to include a queue to store packets received by the network interface controller; wherein the compute engine is configured to determine a predicted time period for the queue to receive packets without overflowing; execute, during the time period and with a core that is assigned to periodically poll the queue for packets, a workload; and poll, with the assigned core, the queue to remove packets from the queue.
Example 2 includes the subject matter of Example 1, and wherein the network interface controller is configured to write, to a packet descriptor associated with a received packet, metadata indicative of a computational load associated with the received packet.
Example 3 includes the subject matter of any of Examples 1 and 2, and wherein the metadata is indicative of a number of packets received by the network interface controller within a predefined time period.
Example 4 includes the subject matter of any of Examples 1-3, and wherein the metadata is indicative of a type of workload to be executed by one or more of the cores.
Example 5 includes the subject matter of any of Examples 1-4, and wherein the queue is an input queue and the memory further comprises an output queue to store packets that are to be sent from the compute device by the network interface controller and the compute engine is further to determine a second predicted time period for the output queue to receive packets without overflowing and to execute, with a core that is assigned to poll the output queue, a workload during the second predicted time period.
Example 6 includes the subject matter of any of Examples 1-5, and wherein to determine the predicted time period comprises to determine the predicted time period as a function of a capacity of the queue and a peak packet receipt rate of the network interface controller.
Example 7 includes the subject matter of any of Examples 1-6, and wherein to determine the predicted time period comprises to determine the predicted time period as a function of metadata present in a packet descriptor of a received packet, wherein the metadata is indicative of a computational load associated with the received packet.
Example 8 includes the subject matter of any of Examples 1-7, and wherein to determine the predicted time period comprises to determine the predicted time period as a function of a rate at which packets are removed from the queue.
Example 9 includes the subject matter of any of Examples 1-8, and wherein to determine the predicted time period comprises to determine the predicted time period as a function of a historical rate at which packets have been removed from the queue.
Example 10 includes the subject matter of any of Examples 1-9, and wherein to determine the predicted time period comprises to determine a rate at which packets are removed from the queue as a function of a workload type that each receive packet pertains to and a computational load associated with each workload type.
Example 11 includes the subject matter of any of Examples 1-10, and wherein the compute engine is further configured to determine each workload type at least from metadata present in a packet descriptor associated with each packet.
Example 12 includes the subject matter of any of Examples 1-11, and wherein the compute engine is further configured to adjust the rate in an inverse relationship with the computational load associated with each workload type.
Example 13 includes the subject matter of any of Examples 1-12, and wherein the compute engine is further configured to determine the rate as a weighted average rate for a set of the packets associated with multiple different workload types.
Example 14 includes the subject matter of any of Examples 1-13, and wherein the compute engine is further to operate the assigned core in a low power state for a portion of the predicted time period.
Example 15 includes one or more machine-readable storage media comprising a plurality of instructions stored thereon that, in response to being executed, cause a compute device to determine a predicted time period for a queue to receive packets without overflowing; execute, during the time period and with a core that is assigned to periodically poll the queue for packets, a workload; and poll, with the assigned core, the queue to remove the packets from the queue.
Example 16 includes the subject matter of Example 15, and wherein the plurality of instructions further cause the compute device to write, to a packet descriptor associated with a received packet, metadata indicative of a computational load associated with the received packet.
Example 17 includes the subject matter of any of Examples 15 and 16, and wherein the plurality of instructions further cause the compute device to write a number of packets received by a network interface controller of the compute device within a predefined time period.
Example 18 includes the subject matter of any of Examples 15-17, and wherein the plurality of instructions further cause the compute device to write metadata indicative of a type of workload to be executed by one or more of the cores.
Example 19 includes the subject matter of any of Examples 15-18, and wherein the queue is an input queue and the plurality of instructions further cause the compute device to determine a second predicted time period for an output queue to receive packets without overflowing and to execute, with a core that is assigned to poll the output queue, a workload during the second predicted time period.
Example 20 includes the subject matter of any of Examples 15-19, and wherein the plurality of instructions further cause the compute device to determine the predicted time period as a function of a capacity of the queue and a peak packet receipt rate of the network interface controller.
Example 21 includes the subject matter of any of Examples 15-20, and wherein the plurality of instructions further cause the compute device to determine the predicted time period as a function of metadata present in a packet descriptor of a received packet, wherein the metadata is indicative of a computational load associated with the received packet.
Example 22 includes a method comprising determining, by a compute device, a predicted time period for a queue to receive packets without overflowing; executing, during the time period and with a core of the compute device that is assigned to periodically poll the queue for packets, a workload; and polling, with the assigned core, the queue to remove the packets from the queue.
Example 23 includes the subject matter of Example 22, and further including writing, with a network interface controller and to a packet descriptor associated with a received packet, metadata indicative of a computational load associated with the received packet.
Example 24 includes the subject matter of any of Examples 22 and 23, and wherein writing the metadata comprises writing a number of packets received by the network interface controller within a predefined time period.
Example 25 includes a compute device comprising means for determining a predicted time period for a queue to receive packets without overflowing; circuitry for executing, during the time period and with a core of the compute device that is assigned to periodically poll the queue for packets, a workload; and circuitry for polling, with the assigned core, the queue to remove the packets from the queue.

## Claims

1. A speech detection system comprising:
a memory to store received audio input; and
a processor coupled to the memory, the processor to:
generate, via acoustic scoring of an acoustic model based on the received audio input, a plurality of probability scores each for a corresponding audio unit;
update a speech pattern model based on at least some of the probability scores to generate a score for each state of the speech pattern model, wherein the speech pattern model comprises a first non-speech state comprising a plurality of self loops each associated with a non-speech probability score of the probability scores, a plurality of speech states following the first non-speech state, and a second non-speech state following the speech states, wherein the speech states comprise a first speech state following the first non-speech state and a second speech state following the first speech state and preceding the second non-speech state;
determine whether the received audio input comprises speech based on a comparison of a first score of the first non-speech state and a second score of the second speech; and
provide a speech detection indicator when the received audio input comprises speech.

2. The speech detection system of claim 1, wherein the comparison of the first score and the second score comprises a comparison of a difference between the second score and the first score to a threshold, wherein the first speech state is connected to the first non-speech state by a plurality of first transitions each corresponding to a speech probability score of the probability scores and the second non-speech state is connected to the second speech state by a plurality of second transitions each corresponding to a non-speech probability score of the probability scores.

3. The speech detection system of claim 1 or 2, the processor further to:
detect an end of speech for a speech signal based on a third score of the second non-speech state exceeding the second score, wherein the processor to detect the end of speech comprises the processor to determine a score of the second non-speech state exceeds a score of the second speech state for a majority of a plurality of consecutive speech model pattern updates.

4. The speech detection system of any of claims 1 to 3, the processor further to:
detect, based on a prior updating of the speech pattern model, a beginning of speech for the speech signal based on a fourth score of the first speech state exceeding a fifth score of the first non-speech state; and
provide temporal indicators of the speech signal based on the beginning of speech and the end of speech.

5. The speech detection system of any of claims 1 to 4, wherein the second non-speech state is a silence state connected to the second speech state by a plurality of transitions each corresponding to a silence score of the plurality of scores.

6. The speech detection system of claim 1, wherein the first speech state is connected to the first non-speech state by a plurality of first transitions each corresponding to a speech probability score of the probability scores, wherein subsequent non-speech states are connected to previous non-speech states by corresponding pluralities of second transitions corresponding to the speech probability scores, and wherein the second non-speech state is connected to the second speech state by a plurality of third transitions each corresponding to the non-speech probability scores of the plurality of self loops.

7. The speech detection system of claim 6, wherein the processor to update the speech pattern model comprises the processor to:
provide a continual summing at the first non-speech state based on a previous score of the first non-speech state and a maximum probability score of the non-speech probability scores of the plurality of self loops; and
provide a value at each of the speech states exclusive of the second speech state based on a sum of a previous score at an immediately preceding state and a maximum probability score of the speech probability scores.

8. A computer-implemented method for speech detection comprising:
generating, via acoustic scoring of an acoustic model based on received audio input, a plurality of probability scores each for a corresponding audio unit;
updating a speech pattern model based on at least some of the probability scores to generate a score for each state of the speech pattern model, wherein the speech pattern model comprises a first non-speech state comprising a plurality of self loops each associated with a non-speech probability score of the probability scores, a plurality of speech states following the first non-speech state, and a second non-speech state following the speech states, wherein the speech states comprise a first speech state following the first non-speech state and a second speech state following the first speech state and preceding the second non-speech state;
determining whether the received audio input comprises speech based on a comparison of a first score of the first non-speech state and a second score of the second speech; and
providing a speech detection indicator when the received audio input comprises speech.

9. The method of claim 8, wherein the comparison of the first score and the second score comprises a comparison of a difference between the second score and the first score to a threshold, wherein the first speech state is connected to the first non-speech state by a plurality of first transitions each corresponding to a speech probability score of the probability scores and the second non-speech state is connected to the second speech state by a plurality of second transitions each corresponding to a non-speech probability score of the probability scores.

10. The method of claim 8 or 9, further comprising:
detecting an end of speech for a speech signal based on a third score of the second non-speech state exceeding the second score, wherein detecting the end of speech comprises determining a score of the second non-speech state exceeds a score of the second speech state for a majority of a plurality of consecutive speech model pattern updates.

11. The method of any of claims 8 to 10, further comprising:
detecting, based on a prior updating of the speech pattern model, a beginning of speech for the speech signal based on a fourth score of the first speech state exceeding a fifth score of the first non-speech state; and
providing temporal indicators of the speech signal based on the beginning of speech and the end of speech.

12. The method of claim 8, wherein the first speech state is connected to the first non-speech state by a plurality of first transitions each corresponding to a speech probability score of the probability scores, wherein subsequent non-speech states are connected to previous non-speech states by corresponding pluralities of second transitions corresponding to the speech probability scores, wherein the second non-speech state is connected to the second speech state by a plurality of third transitions each corresponding to the non-speech probability scores of the plurality of self loops,

13. The method of claim 12, wherein updating the speech pattern model comprises:
providing a continual summing at the first non-speech state based on a previous score of the first non-speech state and a maximum probability score of the non-speech probability scores of the plurality of self loops; and
providing a value at each of the speech states exclusive of the second speech state based on a sum of a previous score at an immediately preceding state and a maximum probability score of the speech probability scores.

14. An apparatus, comprising means for performing a method as claimed in any preceding claim.

15. Machine-readable storage including machine-readable instructions which, when executed, implement a method or realize an apparatus as claimed in any preceding claim.
